# EUROPEAN PATENT SPECIFICATION

(11) **EP 3 479 068 B1**
(45) Date of publication and mention of the grant of the patent: **22.09.2021**
(21) Application number: 17733839.9
(22) Date of filing: 28.06.2017
(51) Int. Cl.: G01D 4/00, H04Q 9/00

(54) **DECENTRALIZED MEASURING SYSTEM AND NETWORK**
DEZENTRALISIERTES MESSSYSTEM UND NETZWERK
SYSTÈME ET RÉSEAU DE MESURE DÉCENTRALISÉE

(30) Priority: 01.07.2016 SE 1650963
(43) Date of publication of application: 08.05.2019
(73) Proprietor: 3F Security AB, 171 54 Solna (SE)
(72) Inventor: LINDGREN, Bo Gustav, 117 54 Solna (SE); HANSSON, Göran Nils, 117 54 Solna (SE); NORBERG, Stig, 117 54 Solna (SE)
(74) Representative: AWA Sweden AB
(86) International application number: PCT/EP2017/066052
(87) International publication number: WO 2018/002172

(56) References cited:
- EP-A1- 2 566 125
- WO-A1-2012/104149
- US-A1- 2010 188 254
- US-A1- 2011 255 548
- US-A1- 2014 018 111

## Description

### Technical field

The present invention generally relates to the field of reading of measurements and more particularly to a method and a system for use in network remote reading of utility meters and associated use.

### Technical background

Utility meters are important in measuring the consumption of water, gas, electricity or similar. The measurements are typically performed on a billing unit, such as a home, but may also be utilized in monitoring on a larger or smaller scale.

Generally, reading of measurements can be provided in a numerous of different way, each of them associated with their specific requirements and potential problems.

Historically, reading of utility meters has long been a manual labor where a reading of a meter had to be performed on location.

In order to simplify reading of the meters, development for remote reading of utility meters has led to the Meter-Bus (MBus) and similar systems.

Within the MBus system a specific meter transmits an immediate measurement at a set interval to a specific connected collector. The communication between the collector and the meter may be wired (EN 13757-2, EN 13757-3) or wireless (EN 13757-4).

On installation of a MBus system each specific meter receives a unique serial number identification, this unique identification is then attached and set in a specific collector that is in communication with the meter and typically positioned at the same general location as the meter, such as in the same building. A plurality of meters may be just a serial number set in the specific collector which then administrates the readings from the specific meters. On request from a common master, the collector sends its underlying specific collectors collected readings.

Due to the construction of the MBus system there are associated deficiencies. The infrastructure is sensitive, should a specific collector fail, the connection to the associated specific meters is also lost. Further, due to the set intervals at which the communication occurs, a signal originating in the meter will not be received until a prolonged time has passed.

To improve the MBus system an increased speed may be envisioned, this may be performed by decreasing the interval at which communications occur. However, the wireless MBus system is active in a regulated field with strict rules relating to for example power of a transmitter, frequencies, competitive system interference and how long time a transmitter may be active in the same environment as other competitive communication systems. Even more, since more frequent transmissions is associated with an increased power consumption, issues relating to power consumption and how long a meter is supposed to operate on a battery further limits the scope of such solutions.

US 2014/018111 A1, WO 2012/104149 A1 and WO 2011/094500 A1 are examples of known networks for remote reading of utility meters in which measurement data is broadcast.

US 2010/188254 A1, US 2011/255548 A1 and EP 2566125 A1 are further examples of known networks for remote reading of utility meters.

Thus, the inventor of the present invention have identified a need for improvements in providing networking and remote readings of utility meters and associated use that is designed to overcome or at least mitigate the problems stated above, and which provides a method with an improved functionality in a more robust construction that provides reliability benefits.

### Summary of the invention

An object of the present invention is to provide a system for providing communication for remote readings of utility meters which overcomes the problems stated above.

A further object of the present invention is to provide a system with advantages relating to reliability, time for employment, extended use of functions, flexibility and/or scalability.

The present invention is defined according to the independent claims. Preferred embodiments are set forth in the dependent claims.

The invention is based in an insight that a decentralized storage and a customized network behavior may be used to achieve more robust remote readings of utility meters while providing additional functional benefits.

By using decentralized storage and initiating transmissions in a direction from the utility meters a faster and redundant system is created. By this, any waiting periods in relation to known technology is decreased.

Further, since the measurements are stored in the measuring units, historical information can be recreated if a central part of the system should fail. In contrast, known technology stores information relating to sensor identity and measurement centrally, by this a failure in known technology results in loss of data and loss of information relating to where a specific sensor is situated. Further, since additional information is added to the measurements benefits in mapping the system and achieving a more reliable solution is reached. By this information relating to a system is possible to recreate after failure.

According to one aspect of the invention, a method for use in networking and remote reading of utility meters according to claim 1 is provided.

Further, the aspect allows creation or recreation of measurement data or data based on the measurements at a central location. Since information relating to measurements, identification and additional information is stored and transmitted from the detection unit or units, information regarding the system may be mapped without or with little prior knowledge of the system.

One example is installation of a central unit or replacement of a failed central unit where information relating to historical measurements, signals, capabilities and positions may be received over the network and recreated in the central unit.

Another example is that the aspect of the invention allows a message or information to be pushed to or towards a central unit. This is in contrast with known systems which requests information. By this critical information may reach a central unit in a fast and efficient manner.

The term "sensor" in this context means a device that is arranged to detect events or changes in its environment and provide a measurement signal, or is suitable to be arranged to provide a measurement signal, that is indicative of a performed measurement relating to the detected events or changes.

The term "measurement signal" in this context means an output provided by a sensor in response to a performed measurement.

The transmission of data package may for an example utilize one or a plurality of different types of encapsulated or strait links, such as for example xDSL, 2G, 3G, TCP/IP, WiFi, Bluetooth, WiMax, WLL, PSTN, optical fibre or a combination thereof.

The term "encapsulated" in this context means the use of a predestined link which transport the data package content as it is, encapsulated. That can be achieved by different types of network systems such as for an example Bluetooth, TCP/IP, WiFi, ZiggBee, MBus or similar systems.

The term "strait" in this context means the transmission of a data package in a clean form, for an example as RS232C, RS485 or a digital data stream.

A method according to the present invention overcomes the problems stated previously. Suitable applications for a method according to the present invention may be a situation where an improved remote reading of utility meters is requested.

By this, a method and system for networking and remote reading of utility meters may be established.

The term "detection unit" in this context means the device which is configured or configurable to detect and/or measure an entity and transmit a signal or data package containing information relating to or based on the detection or measurement.

A detection unit may be configured via a configuration unit in proximity to the detection unit. The configuration unit may be a smart phone, a computer or similar. The configured may be over a parallel or serial link over for example Near Field Communication (NFC), Bluetooth, RS232C or similar. Remote configuration of the detection unit may be possible over for an example xDSL, 2G, 3G, TCP/IP, WiFi, Bluetooth, WiMax, WLL, PSTN, optical fibre or a combination thereof. A detection unit may be provided with a unique identification, such as a serial number, that may be coupled to additional data input during configuration. A detection unit may be coupled with information relating to capabilities, capacity, position, name, geo data, alarm limits and similar.

A detection unit may be a wireless unit equipped with a battery. This design allows an installation without any wires in the location in which it is installed. Further, a detection unit may be assigned a function and position at installation by for an example a smart phone, a tablet, a portable computer or similar.

A detection unit may further be reconfigured in a manner similar to that used during configuration.

The term "collection unit" in this context means the device which is configured or configurable to collect information in transmissions from one or more sources and retransmit that information. A collection unit may add additional information before retransmission. A collection unit may be provided with different modes of operation, such as processing serially or in parallel. A collection unit may be arranged to assign or recognize a priority of a received transmission, based on this priority different actions may be taken. A high priority may be coupled with a more secure retransmission, a faster retransmission or similar. As a non-limiting example a received high priority transmission may be retransmitted before a received transmission without high priority. A collection unit may further be configured to group information before retransmission, hence the retransmission may contain information from one received transmission or a plurality. A retransmission containing information from a plurality of received transmissions may arrange information in numerous ways, such as by originating detection unit, by time, by position, by priority or similar.

A collection unit may receive a transmission over for example xDSL, 2G, 3G, TCP/IP, WiFi, Bluetooth, WiMax, WLL, PSTN, optical fibre or a combination thereof containing a data package from a detection unit. The collection unit may then add information relating to the identity of the collection unit to the data package and transmit the data package to an assigned central unit over for example xDSL, 2G, 3G, TCP/IP, WiFi, Bluetooth, WiMax, WLL, PSTN, optical fibre or a combination thereof. The collection unit may receive a plurality of transmissions from a plurality of detection units.

The term "central unit" in this context means the device which is configured or configurable to collect information in transmissions from one or more sources, such as collection units, and compile a database from the collected information and/or containing the collected information.

A central unit may receive measurements from the detection units, information relating a detection unit, information relating to a collection unit utilized in retransmitting the data package containing the measurements. A central unit is not limited to receiving transmissions from one collection unit, but may receive transmissions from a plurality of collections units. For an example a central unit may receive information and compile a database containing measurements, capabilities and position of detection units providing the measurements, information on which collection unit a data package from a detection unit utilized and similar.

A central unit may receive a data package from a detection unit trough a plurality of collection units, this data may then contain information relating to which collection unit was used in the plurality of received transmission. As the same measurement is delivered in a plurality of ways, this information may be used to establish a collection unit which is more reliable for use with a specific measurement unit. This information may be used to build a more reliable system. Since information is transmitted in a plurality of ways, a redundant system may be built.

According to the invention, the collection unit adds information to the data package. The information added by the collection unit relates to the time at which the data package was received, and it may further relate to at which Radio

Field power strength the transmission was received, an identification of the collection or similar. The time may be provided by a real time unit clock that may be local or communicated from a network. This allows for a simplified way of monitoring the collection unit and different processes of the system.

According to the invention, the information the collection unit adds to the data package comprises a time and may further comprise a signal strength. The time is indicative of when the collection unit receives the data package. The Radio Field signal strength may be indicative of the signal strength at which the received transmission containing the data package was received.

According to the invention, the transmission from the detection unit is a broadcast transmission. This allows for a simplified installation of the detection unit and a wide communication, since the communications do not need to be between specified units. During installation of a broadcasting unit a receiver of the communication may be omitted, by this simplifying the procedure. By utilizing broadcast transmissions, a communication may reach a plurality of units.

In one embodiment, the transmission may be encrypted in such a way that only authorized units can read it. Encryption may be set at a detection unit or a collection unit, the encryption key may be deployed at the central unit or collection unit. This embodiment allows a more secure transmission of measurement data.

In one embodiment, the data package transmission from the detection unit may be received at a plurality of collection units. Each of the plurality of collection units may add a unique information to the received data package and each of the plurality of collection units may initiate a transmission of respective data package to a central unit. This embodiment allows for an increased redundancy as the remote reading of utility meters may rely on more than a single collection unit. Further, information relating to the detection unit may be achieved by this, for an example information relating to at which signal strength as the detection unit communicates with different collection units may be used to find the measuring units position in relation to the collection units by triangulation. This embodiment is not limited to finding a position, but further uses may be envisioned. As a further example, delays in the network may be found by comparing time stamps. As one more further example, by comparing the received data, possible corruptions and sources thereof may be found.

In one embodiment, a central unit receiving a data package transmission from a detection unit from a plurality of collection units may comprise a plurality of databases. For an example a first database may comprise all or a majority of the received data and a second database may comprise a sub set of the received data, for an example with a singular post that is considered to represent the data package transmission from the detection unit. Should the data package transmission from a specified detection unit differ depending on which collection units forwarding the transmission, an algorithm may be used to find the data considered as most likely to represent the actual measurement. This most likely to representation may be put together in a database as well. Further, information from a plurality of databases may be presented in a single database.

In one embodiment, a detection unit may add information to a package where the information specifies how a collection unit is to transmission the package to a central unit. The added information may be added in a package header or other place where the measurement data in the package is unaffected.

In one embodiment, a position of a detection unit may be found based on the unique information added by each of the plurality of collection units.

In one embodiment, the data package transmission from the collection unit may utilize PUSH technology. By using PUSH technology the request for a given communication may be initiated by the communicating unit. Other solutions to initiate a communication at the sender may be envisioned.

In a further aspect, the invention relates to a system for networking and remote reading of utility meters according to claim 8.

### Exemplary list

In one example a local decentralized redundant data storage system may comprise a locally-installed radio based measuring device (MD), a data telegrams method (DT), an alarm data method (DL), means (LTX), means (LRX) and means (SMS). The locally-installed radio based measuring device (MD) may have a decentralized stored data telegrams (DD), at least two or more collection units (IE1, IE..n) receiving the same decentralized stored data telegram (DD) from the measuring device (MD), the redundancy formed of the same decentralized stored data telegram (DD) is stored in the collection unit (IE1, IE..n) from the measuring device (MD). The data telegrams method (DT) may be for transmitting decentralized stored data telegrams (DD) stored in the measuring device (MD) and transferred to the collection unit (IE1, IE..n), storing measurement data (TMD) and geo-information, object data (OBJ) and measurement specific data (MDT). The alarm data method (DL) for immediate shipment of the shorter alarm data telegrams (DLT) with the object data (OBJ) for immediate response in the central system (CS). The means (LTX) may have parameter control for fast transmission of alarm data telegrams (DLT). The means (LRX) in the central system (CS), which may identify and record alarm data telegrams in its own database (LDB) in the central system (CS). The means (SMS) in the central system (CS) may initiate an SMS or email broadcast received at a time identifies the alarm data telegrams (DLT).

In a further example, a local decentralized redundant data storage system may further comprise a locally-installed radio based measuring device (MD), a data telegram method (DT), means for parametric periodically broadcast of decentralized stored data telegrams (DD) and means for parametric detection and transmission of alarm data telegrams (DLT). The locally-installed radio based measuring device (MD) may have means for storing the collected periodically and averaged measurement information. The data telegrams method (DT) may also be for forming a coherent decentralized stored data telegrams (DD) stored in the measuring device (MD). The means for parametric periodically broadcast of decentralized stored data telegrams (DD) may be also stored in the measuring device (MD).

In an example, a local decentralized redundant data storage system may further comprise that decentralized stored data telegrams (DD) stored in the measuring device (MD) with a minimum period stored temporarily data and geo-information, object data (OBJ) and measurement specific data (MDT) that can recover entire data information in the central processing unit (CS) database in the span of hours or minutes, and a parametric database function (SKELETON) that recreates the data in master control unit (CS) database.

In an example, a local decentralized redundant data storage system may further comprise PUSH technology with TCP / IP, the Internet, wired or GPRS used for data transport from the collection device (IE1, IE..n) to the central database (CS) of the received decentralized stored data telegrams (DD) from (MD) and temporarily stored in the collection units (IE1, IE..n). The system may further comprise means in the (IE1, IE..n) in the form of a temporary data storage unit (IMID), means in the (IE1, IE..n) in the form of radio-receiver-field strength meter (RRS) and means in the (IE1, IE..n) in the form of real-time clock (RTC) for time-tampering features. The system may further comprise means in the collection unit (IE1, IE..n), such as a parameter-driven organizing PUSH function so that a multiple decentralized stored data telegrams (DD) in the collection units (IE1, IE..n) may be packaged in a larger data packet to streamline transfer through the network (NET). For an example the network may be the internet, GPRS, Local area network, or via RS485 and wire mesh, The system may further comprise means in the collection unit (IE1, IE..n) which handles POLL functions. The POLL functions receives and responds to commands from the central system (CS) when the collection unit (IE1, IE..n) is at rest with no communication with the central system (CS).

In an example, a local decentralized redundant data storage system may further comprise measuring instruments (MD) that process and store data regardless of the collection units (IE1, IE..n).

In an example, a local decentralized redundant data storage system may further comprise collection devices (IE1, IE..n) that may store decentralized stored data telegrams (DD) with additional information in the form of statistics related to each receive a time decentralized stored data telegrams (DD) so that receiving time of the (IE1, IE..n) recorded for each decentralized stored data telegrams (DD), and a radio receiver-field strength (RRS) in (IE1, IE..n) for a received on decentralized stored data telegrams (DD). The receiving time of the (IE1, IE..n) may be generated by a real time clock (RTC).

In an example, a local decentralized redundant data storage system may further comprise that the central system (CS) receives the decentralized stored data telegrams (DD), and verifies that from (IE1, IE..n) emitting decentralized stored data telegram (DD) contains at least relevant and identifiable header information, and that at the proper time receive decentralized stored data telegrams (DD) are time stamped and stored the message in raw database (RADB), and where erroneous received decentralized stored data telegrams (DD) but with relevant and identifiable header information is stored and time-stamped the decentralized stored data telegrams (DD) in the central system (CS), the raw database (RADB), and that the central system (CS) verifies proper decentralized stored data telegrams (DD) in the raw database (RADB), and that the suitable means (SORT) in the central system (CS) selects the unique decentralized stored data telegram (DD) in the raw database (RADB) that have the highest radio receiver field strength (RRS) per (IE1, IE..n) cluster to be forwarded to the central unit (CS) SQL database.

In an example, a local decentralized redundant data storage system may further comprise that the measuring devices (MD) physical position in the x, y, z point may be determined in a building by means of triangulation of stored statistical data. The stored statistical data may be radio receiver field strength (RRS) and the physical placement of IE1, IE ... n in the building.

In an example, a local decentralized redundant data storage system may further comprise that the system data stored in the measuring device (MD) generated in the form of decentralized stored data telegram (DD) and the measuring device (MD) and in such way performs that the suitable means stores the measurement data at times (TMD) in sequential order in decentralized stored data telegrams (DD) in the measuring device (MD).

In an example, a local decentralized redundant data storage system may further comprise that a measuring device (MD) allows storage of decentralized stored data telegrams (DD) in gauges (MD) memory and depends on the measuring device (MD) input data storage parameters (DLP).

In an example, a local decentralized redundant data storage system may further comprise a measuring device (MD) that allows storage of decentralized stored data telegrams (DD) in the measuring device (MD) memory and further depends on the measuring device (MD) in input data storage parameters (DLP) that the measuring device (MD) during installation is fed into the measuring device (MD) as specific data string to control building of decentralized stored data message (DD) of the measuring device (MD).

In an example, a local decentralized redundant data storage system may further comprise a measuring device (MD) that allows storage of decentralized stored data telegrams (DD) in the measuring device (MD) memory and is dependent on and controlled by the measuring device (MD) in input data storage parameters (DLP) that during the production of the measuring device (MD) in prefabricated measuring device (MD) as generic measuring device (MD), with no data storage parameters (DLP) input of measuring device (MD).

In an example, a local decentralized redundant data storage system may further comprise that during installation in the building, the control data into the measuring device (MD) as specific data string (MDINIT) controlling the structure and function of the decentralized stored data message (DD) of the measuring device (MD) in which the functions are generated in the body of the central system (CS) database that extracts data from the customer database for the property in question and generate specific data string (MDINIT) which controls the construction and generation of decentralized stored data telegrams (DD) in the measuring device (MD).

In an example, a local decentralized redundant data storage system may further comprise a specific data string (MDINIT) containing geo information, data objects (OBJ) and measurement specific data (MDT) controlling the structure and function of the decentralized stored data message (DD) of the measuring device (MD) on manner that object data (OBJ) generates property-specific data such as cadastral, staircase, landing, apartment number, room identification, special function field.

In an example, a local decentralized redundant data storage system may further comprise a specific data string (MDINIT) containing geo information, data objects (OBJ) and measurement specific data (MDT) controlling the structure and function of the decentralized stored data message (DD) of the measuring device (MD) on manner that measurement specific data (MDT) generate control data such as functions, time parameters, logical function parameters, alarm function parameters and special features.

In an example, a local decentralized redundant data storage system may further comprise that decentralized stored data telegrams (DD) stored in the measuring device (MD) with minimum a specified period stored temporarily data and geo-information, object data (OBJ) and measurement specific data (MDT) can recover the entire data information in the superior central processing unit (CS) database in the span of hours or minutes, and that a parametric database function (SKELETON) that recreates the data in a central control unit (CS) database, and this takes place within a short span after an interruption.

In an example, a local decentralized redundant data storage system may further comprise a decentralized stored data telegrams (DD) stored in the measuring device (MD) with minimum a specified period of stored temporary data and geo-information, object data (OBJ) and measurement specific data so that a smart phone, tablet, PC or other suitable input device that is in contact with the central system (CS) via the Internet may be used in the installation. A specific data string (MDINIT) may be generated in the central system (CS) and transferred to the measuring device (MD) by the use of infrared communications, NFC, wired transfer by RS232C or RS485, and/or Bluetooth radio transmission.

In an example, a local decentralized redundant data storage system may further comprise a decentralized stored data telegrams (DD) that may be stored in the measuring device (MD) with minimum a set period of stored measurement data and geo-information, the data object (OBJ) and measurement specific data, using an external handheld magnet that affects a reed switch so that the measuring device initiates a retransmission of an installation telegram reports stored periodically collected data and geo-information, object data and measurement specific data and specific function data from the instrument function log, so that information through (IE1, IE..n) and via the (CS) and Internet displays the gage information in a smart phone, PC, tablet and/or similar.

### Brief description of the appended drawings

The invention is described in the following illustrative and non-limiting detailed description of exemplary embodiments, with reference to the appended drawings, wherein:
Figure 1 is a schematic illustration of a method according to a first aspect of the present invention.
Figure 2 is a schematic illustration of a method according to one embodiment of the invention.
Figure 3 is a schematic illustration of a method according to one embodiment of the invention.
Figure 4 is a schematic illustration of an arrangement according to a second aspect of the present invention.
Figure 5 is a schematic illustration of an arrangement.
Figure 6 is a schematic illustration of an arrangement.

All figures are schematic, not necessarily to scale, and generally only show parts which are necessary in order to elucidate the invention, wherein other parts may be omitted or merely suggested. Throughout the figures the same reference signs designate the same, or essentially the same features.

### Detailed description of preferred embodiments of the invention

The present invention can be used to provide remote reading of utility meters at least partly using a network which overcome or at least mitigate the problems of the prior art and with an improved functionality in a more robust construction that provides reliability benefits.

The invention is described in the following illustrative and non-limiting detailed description of exemplary embodiments, with reference to the appended drawings, wherein:

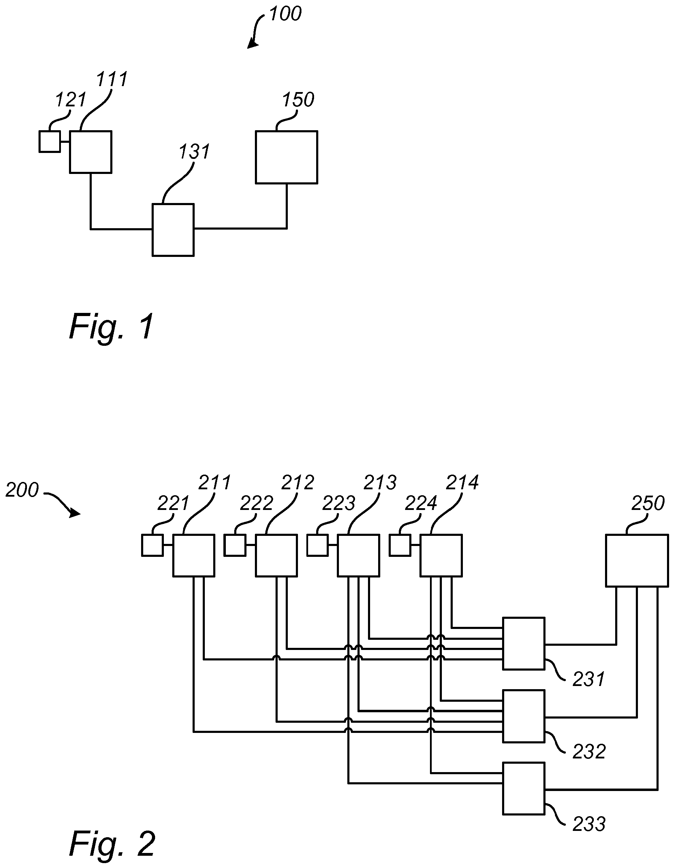

Figure 1 shows a schematic illustration 100 of a method for use in networking and remote reading of utility meters, according to an aspect of the present invention. The method comprises providing and storing of a measurement signal and transmission of a data package. The measurement signal is provided from a sensor 121 and is provided to a detection unit 111. The detection unit 111 transmits a data package, via a collection unit 131, to a central unit 151. The measurement signal is indicative of a performed measurement at the sensor 121. The detection unit 111 stores the provided measurement signal in a storage, either a singular signal or with a plurality of provided signals. The transmission of the data package from the detection unit 111 is initiated at the detection unit 111 and comprises the singular signal or the plurality of measurement signals from the detection unit 111. The collection unit 131 receives the data package from the detection unit 111 and transmits the data package to a central unit 150. The transmission of the data package from the collection unit 131 is initiated at the collection unit 131.

Figure 2 shows a schematic illustration 200 of a method for use in networking and remote reading of utility meters, according to an embodiment of the present invention. The method comprises providing and storing of a measurement signal and transmission of a data package.

The measurement signal is provided from a plurality of sensors 221, 222, 223, 224 and is provided to a respective detection unit 211, 212, 213, 214. The detection units 211, 212, 213, 214 transmits a respective data package, via all available collection units 231, 232, 233, to a central unit 250. In the present illustration the collection unit 231 receives transmissions from the detection units 211, 212, 213 and 214; the collection unit 232 receives transmissions from the detection units 211, 212, 213 and 214; and the collection unit 233 receives transmissions from the detection units 213 and 214. The measurement signals are indicative of a performed measurement at the sensors 221, 222, 223, 224. The respective detection units 211, 212, 213, 214 stores the provided measurement signal in a respective storage, either a singular signal or with a plurality of provided signals. The transmission of the data packages from the respective detection units 211, 212, 213, 214 is initiated at the respective detection units 211, 212, 213, 214 and comprises the singular signal or the plurality of measurement signals from the respective detection units 211, 212, 213, 214. The collection units 231, 232, 233 each receives the respective data packages from the respective detection units 211, 212, 213, 214 and each collection unit 231, 232, 233 transmits the respective data packages to a central unit 250. The transmissions of each respective data package from the respective collection units 231, 232, 233 is initiated at each respective collection unit 231, 232, 233.

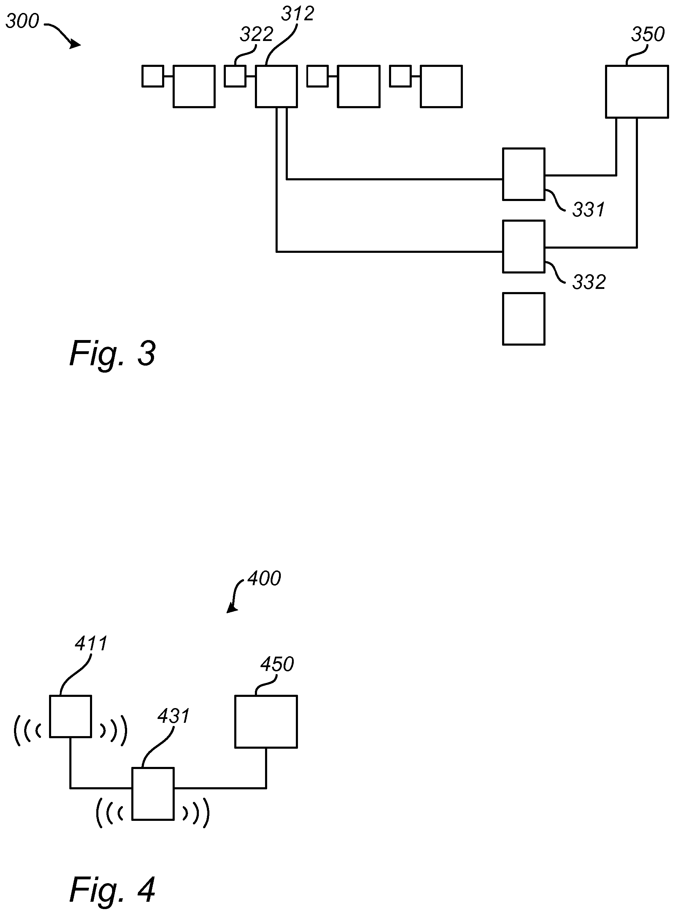

Figure 3 shows a schematic illustration 300 of a method for use in networking and remote reading of utility meters, according to an embodiment of the present invention. The method comprises transmission of an alarm data package signal. The alarm data package signal is provided from a detection unit 312. The detection unit 312 transmits the alarm data package signal, via all available collection units 331, 332, to a central unit 350. In the present illustration the collection unit 331 receives a transmission from the detection unit 312; the collection unit 332 receives a transmission from the detection units 312. The alarm data package signal is indicative of a performed measurement at the sensor 322 that alone or in combination with the detection unit 312 triggered an alarm. The transmission of the alarm data package signal from the detection unit 312 is initiated at the detection unit 312. Each respective collection unit 331, 332 receives the alarm data package signal from the detection unit 312 and each collection unit 331, 332 transmits the alarm data package signal to the central unit 350. The transmissions of each respective alarm data package signal from the respective collection units 331, 332 is initiated at each respective collection unit 331, 332.

Figure 4 shows a schematic illustration of an arrangement 400 for networking and remote reading of utility meters according to an aspect of the present invention. The arrangement comprises a detection unit 411, a collection unit 431 and a central unit 450. The detection unit 411 is adapted to be used as a utility meter and is configured to initiate and transmit a data package comprising a plurality of signals. The collection unit 431 is configured to receive the data package from the detection unit 411 and transmit the data package to a central unit 450. The central unit 450 is configured to receive the data package from the collection unit 431 and process the plurality of signals. Aspects of a general system for providing measurements and networks are well known in the art and will not be described in greater detail.

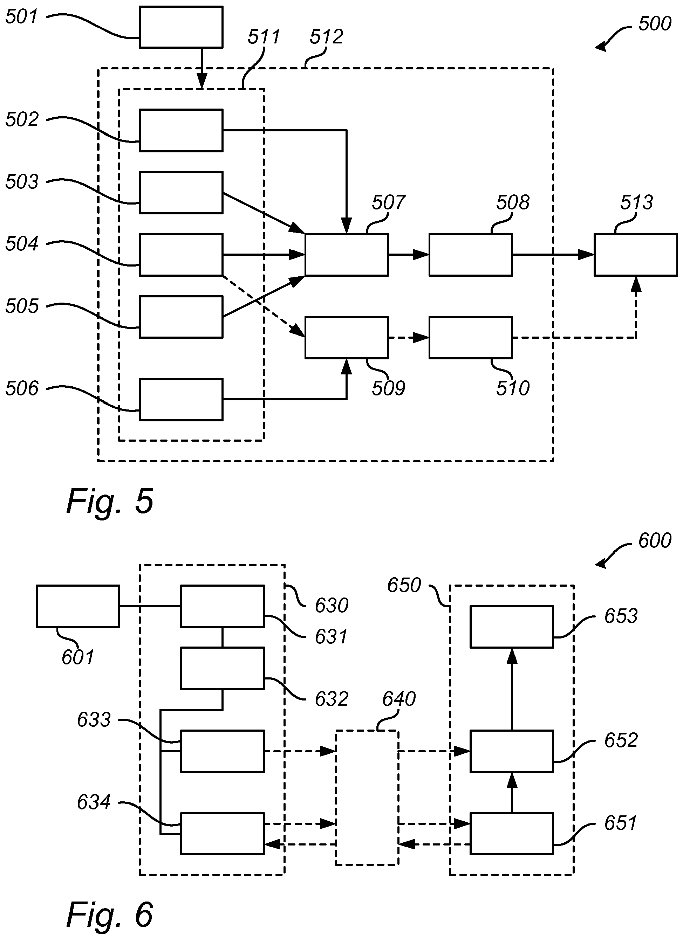

Figure 5 shows a schematic illustration of an arrangement 500. The arrangement 500 comprises a measuring device (MD) 512. The MD 512 comprises parametric and control (MDINIT) 501, data store parameters (DLP) 502, timely stored measurements (TMD) 503, object data (OBJ) 504, measure data parameters (MDT) 505, alarm parameters (LTX) 506, measure data package coordinator (DD) 507, measure data package transmit (DT) 508, alarm data package coordinator (DLT) 509 and alarm data package transmit (DL) 510. The arrangement 500 further comprises a transmitter 513.

MDINIT 501 receives initiate parametric data. MDINIT 501 communicates with a group 511 comprising DLP 502, TMD 503, OBJ 504, MDT 505 and LTX 506. DLP 502 sends to DD 507. TMD 503 receives measure data and sends to DD 507. OBJ sends to DD 507 and DLT 509. MDT 505 sends to DD 507. LTX 506 receives alarm data and sends to DLT 509. DD 507 sends to DT 508. DLT 509 sends to DL 510. Both DT 508 and DL 510 sends to the transmitter 513.

Figure 6 shows a schematic illustration of an arrangement 600. The arrangement 600 comprises a receiver 601, a collector unit (IE) 630, a central system (CS) 650 and a communication enabling part (NET) 640. The IE 630 comprises temporary storage (IMID) 631, radio receiver field strength (RRS) & real time clock (RTC) 632, initiated transmit (PUSH) 633 and poll acting (POLL) 634. The CS 650 comprises polling sequence (POLL) 651, raw data base (RADB) 652 and a CS-SQL 653.

PUSH 633 sends to NET 640. POLL 634 communicates with NET 640. RADB 652 receives from NET 640. POLL 651 communicates with NET 640. RADB 652 receives from POLL 651. CS-SQL 653 receives from RADB 652.

While specific embodiments have been described, the skilled person will understand that various modifications and alterations are conceivable within the scope as defined in the appended claims.

## Claims

1. Method for use in networking and remote reading of utility meters, wherein the method comprises:
providing, from a sensor (121, 221, 222, 223, 224, 322), a measurement signal that is indicative of a performed measurement;
storing, at a detection unit (111, 211, 212, 213, 214, 312, 411) adapted to be used as a utility meter, a plurality of measurement signals provided from the sensor;
initiating, at the detection unit, a transmission of a data package comprising the plurality of measurement signals from the detection unit, wherein the transmission from the detection unit is a broadcast transmission;
receiving, at a plurality of collection units (131, 231, 232, 233, 331, 332, 431), the data package from the detection unit;
adding, at each of the plurality of collection units, information to the received data package, wherein the information comprises a time indicative of when the collection unit receives the data package; and thereafter
initiating, at each of the plurality of collection units, a transmission of the data package to a central unit (150, 250, 350, 450).

2. Method according to claim 1, wherein each of the plurality of collection units adds a unique information to the received data package and each of the plurality of collection units initiates a transmission of respective data package to a central unit.

3. Method of claim 2, further comprising: receiving, at a central unit, the data packages from the plurality of collection units, wherein each data package comprise the plurality of measurement signals from the detection unit.

4. Method of claim 2, further comprising:
finding the position of a detection unit based on the unique information added by each of the plurality of collection units.

5. Method of any preceding claim, wherein the transmission from the collection unit utilizes PUSH technology.

6. Method of any preceding claim, wherein the transmission from a collection unit is directed to a plurality of central units.

7. Method of any preceding claim, wherein the transmission of the data package is encapsulated.

8. System for networking and remote reading of utility meters, wherein the system comprises:
a detection unit (111, 211, 212, 213, 214, 312, 411) adapted to be used as a utility meter and to store measurement signals indicative of a performed measurement,
wherein the detection unit is configured to initiate and transmit a data package comprising a plurality of measurement signals in a broadcast transmission;
a plurality of collection units (131, 231, 232, 233, 331, 332, 431), each configured to receive the data package from the detection unit, to add information to the data package, wherein the information comprises a time indicative of when the collection unit receives the data package, and thereafter to transmit the data package to a central unit (150, 250, 350, 450); and
a central unit configured to receive the data package from each of the plurality of collection units and process the plurality of signals.

## Patentansprüche

1. Verfahren zur Verwendung bei der Vernetzung und Fernauslesung von Versorgungszählern, wobei das Verfahren umfasst:
Bereitstellen, von einem Sensor (121, 221, 222, 223, 224, 322), eines Messsignals, das eine durchgeführte Messung anzeigt;
Speichern, in einer Detektionseinheit (111, 211, 212, 213, 214, 312, 411), die dafür ausgelegt ist, als ein Verbrauchszähler verwendet zu werden, mehrerer Messsignale, die von dem Sensor bereitgestellt werden;
Initiieren, in der Detektionseinheit, einer Übertragung eines Datenpaketes, das die mehreren Messsignale umfasst, von der Detektionseinheit, wobei die Übertragung von der Detektionseinheit eine Rundsendeübertragung ist;
Empfangen, in mehreren Erfassungseinheiten (131, 231, 232, 233, 331, 332, 431), des Datenpaketes von der Detektionseinheit;
Hinzufügen, in jeder der mehreren Erfassungseinheiten, von Informationen zu dem empfangenen Datenpaket, wobei die Informationen eine Zeit umfassen, die anzeigt, wann die Erfassungseinheit das Datenpaket empfängt; und
anschließendes Initiieren, in jeder der mehreren Erfassungseinheiten, einer Übertragung des Datenpaketes in eine Zentraleinheit (150, 250, 350, 450).

2. Verfahren nach Anspruch 1, wobei jede der mehreren Erfassungseinheiten eine eindeutige Information zu dem empfangenen Datenpaket hinzufügt, und jede der mehreren Erfassungseinheiten eine Übertragung eines jeweiligen Datenpaketes zu einer Zentraleinheit initiiert.

3. Verfahren nach Anspruch 2, das des Weiteren umfasst:
Empfangen, in einer Zentraleinheit, der Datenpakete von den mehreren Erfassungseinheiten, wobei jedes Datenpaket die mehreren Messsignale von der Detektionseinheit umfasst.

4. Verfahren nach Anspruch 2, das des Weiteren umfasst:
Finden der Position einer Detektionseinheit auf der Grundlage der eindeutigen Information, die durch jede der mehreren Erfassungseinheiten hinzugefügt wurden.

5. Verfahren nach einem der vorangehenden Ansprüche, wobei die Übertragung von der Erfassungseinheit PUSH-Technologie verwendet.

6. Verfahren nach einem der vorangehenden Ansprüche, wobei die Übertragung von einer Erfassungseinheit zu mehreren Zentraleinheiten gerichtet ist.

7. Verfahren nach einem der vorangehenden Ansprüche, wobei die Übertragung des Datenpaketes gekapselt erfolgt.

8. System zur Vernetzung und Fernauslesung von Versorgungszählern, wobei das System umfasst:
eine Detektionseinheit (111, 211, 212, 213, 214, 312, 411), die dafür ausgelegt ist, als ein Verbrauchszähler verwendet zu werden und Messsignale zu speichern, die eine durchgeführte Messung anzeigen, wobei die Detektionseinheit dafür konfiguriert ist, ein Datenpaket, das mehrere Messsignale umfasst, in einer Rundsendeübertragung zu initiieren und zu senden;
mehrere Erfassungseinheiten (131, 231, 232, 233, 331, 332, 431), die jeweils dafür konfiguriert sind, das Datenpaket von der Detektionseinheit zu empfangen, dem Datenpaket Informationen hinzufügen, wobei die Informationen eine Zeit umfassen, die anzeigt, wann die Erfassungseinheit das Datenpaket empfängt, und danach das Datenpaket in eine Zentraleinheit (150, 250, 350, 450) zu senden; und
eine Zentraleinheit, die dafür konfiguriert ist, das Datenpaket von jeder der mehreren Erfassungseinheiten zu empfangen und die mehreren Signale zu verarbeiten.

## Revendications

1. Procédé destiné à être utilisé dans le réseautage et la lecture à distance de compteurs de service public, dans lequel le procédé comprend :
la fourniture, depuis un capteur (121, 221, 222, 223, 224, 322), d'un signal de mesure qui est indicatif d'une mesure effectuée ;
le stockage, au niveau d'une unité de détection (111, 211, 212, 213, 214, 312, 411) apte à être utilisée en tant qu'un compteur de service public, d'une pluralité de signaux de mesure fournis depuis le capteur ;
le lancement, au niveau de l'unité de détection, d'une transmission d'un ensemble de données comprenant la pluralité de signaux de mesure depuis l'unité de détection, dans lequel la transmission depuis l'unité de détection est une transmission de diffusion ;
la réception, au niveau d'une pluralité d'unités de collecte (131, 231, 232, 233, 331, 332, 431), de l'ensemble de données depuis l'unité de détection ;
l'ajout, à chacune parmi la pluralité d'unités de collecte, d'informations à l'ensemble de données reçu, dans lequel les informations comprennent un temps indicatif de quand l'unité de collecte reçoit l'ensemble de données ; puis
le lancement, au niveau de chacune parmi la pluralité d'unités de collecte, d'une transmission de l'ensemble de données à une unité centrale (150, 250, 350, 450).

2. Procédé selon la revendication 1, dans lequel chacune parmi la pluralité d'unités de collecte ajoute une information unique à l'ensemble de données reçu et chacune parmi la pluralité d'unités de collecte lance une transmission d'un ensemble de données respectif à une unité centrale.

3. Procédé selon la revendication 2, comprenant en outre :
la réception, au niveau d'une unité centrale, des ensembles de données depuis la pluralité d'unités de collecte, dans lequel chaque ensemble de données comprend la pluralité de signaux de mesure depuis l'unité de détection.

4. Procédé selon la revendication 2, comprenant en outre :
la découverte de la position d'une unité de détection sur la base de l'information unique ajoutée par chacune de la pluralité d'unités de collecte.

5. Procédé selon l'une quelconque des revendications précédentes, dans lequel la transmission depuis l'unité de collecte utilise une technologie PUSH.

6. Procédé selon l'une quelconque des revendications précédentes, dans lequel la transmission depuis une unité de collecte est destinée à une pluralité d'unités centrales.

7. Procédé selon l'une quelconque des revendications précédentes, dans lequel la transmission de l'ensemble de données est encapsulée.

8. Système de réseautage et de lecture à distance de compteurs de service public, dans lequel le système comprend :
une unité de détection (111, 211, 212, 213, 214, 312, 411) apte à être utilisée en tant qu'un compteur de service public et à stocker des signaux de mesure indicatifs d'une mesure effectuée, dans lequel l'unité de détection est configurée pour lancer et transmettre un ensemble de données comprenant une pluralité de signaux de mesure dans une transmission de diffusion ;
une pluralité d'unités de collecte (131, 231, 232, 233, 331, 332, 431), chacune d'elles étant configurée pour recevoir l'ensemble de données depuis l'unité de détection, ajouter des informations à l'ensemble de donnée, dans lequel les informations comprennent un temps indicatif de quand l'unité de collecte reçoit l'ensemble de données, puis transmettre l'ensemble de données à une unité centrale (150, 250, 350, 450) ; et
une unité centrale configurée pour recevoir l'ensemble de données depuis chacune parmi la pluralité d'unités de collecte et traiter la pluralité de signaux.
